# EUROPÄISCHE PATENTANMELDUNG

(11) **EP 2 476 918 A1**
(43) Veröffentlichungstag der Anmeldung: **18.07.2012**
(21) Anmeldenummer: 11187524.1
(22) Anmeldetag: 02.11.2011
(51) Int. Cl.: F16B 12/12

(54) **Schwalbenschwanzverbindung**

(30) Priorität: 17.01.2011 DE 202011001627 U
(71) Anmelder: Hundegger, Hans, 87749 Hawangen (DE)
(72) Erfinder: Hundegger, Hans, 87749 Hawangen (DE)
(74) Vertreter: Charrier, Rapp & Liebau

(57) **Zusammenfassung**

Die Erfindung betrifft eine Schwalbenschwanzverbindung zur Verbindung zweier Bauteile (1, 2), insbesondere aus Holz, mit einem am ersten Bauteil (1) vorgesehenen Zapfen (3) mit seitlichen Außenflächen (4) und einer am zweiten Bauteil (2) vorgesehenen Nut (5), die zu den Außenflächen (4) des Zapfens (3) korrespondierende innere Seitenflächen (6) enthält. Um eine gleichmäßigere Lastverteilung und erhöhte Stabilität zu ermöglichen, sind an den Seitenflächen (6) der Nut (5) und an den Außenflächen (4) des Zapfens (3) zueinander korrespondierende Stufen (14, 15) vorgesehen.

## Beschreibung

Die Erfindung betrifft eine Schwalbenschwanzverbindung nach dem Oberbegriff des Anspruchs 1.

Schwalbenschwanzverbindungen werden in vielen Bereichen der Technik und vor allem in der Holzverbindungstechnik eingesetzt, da keine zusätzlichen metallischen Verbindungselemente benötigt werden. Bei den üblichen Schwalbenschwanzverbindungen ist in der Regel an dem einen Bauteil ein Zapfen mit seitlichen Außenflächen und am zweiten Bauteil eine dazugehörige Nut mit zu den Außenflächen des Zapfens korrespondierenden Seitenflächen vorgesehen. Die seitlichen Außenflächen des Zapfens und die dazu korrespondierenden inneren Seitenflächen der Nut sind abgeschrägt, so dass der Zapfen und die Nut im Querschnitt die Form eines Schwalbenschwanzes aufweisen. Dadurch kann eine derartige Verbindung nicht nur Querkräfte, sondern auch Zugkräfte übertragen. Bei den bisher bekannten Schwalbenschwanzverbindungen weisen die seitlichen Außenflächen des Zapfens und die entsprechenden inneren Seitenflächen der Nut einen durchgehenden Verlauf ohne Kanten oder Stufen auf. Dadurch müssen die Zapfen und Keilnuten zur Gewährleistung einer gleichmäßigen Tragwirkung jedoch äußerst genau gefertigt werden. Wenn bei derartigen Schwalbenschwanzverbindungen jedoch aufgrund ungenauer Fertigung oder Schrumpfung des Zapfens zuviel seitliches Spiel zwischen dem Zapfen und der Keilnut vorhanden oder die Belastung auf den Zapfen in Vertikal- bzw. Schubrichtung zu groß ist, liegt der Zapfen nur im unteren Bereich der Nut auf, so dass in diesem die Hauptlast liegt. Dies kann dazu führen, dass die Nut im unteren Bereich ausbricht.

Aufgabe der Erfindung ist es, eine Schwalbenschwanzverbindung der eingangs genannten Art zu schaffen, die eine gleichmäßigere Lastverteilung und erhöhte Stabilität ermöglicht.

Diese Aufgabe wird durch eine Schwalbenschwanzverbindung mit den Merkmalen des Anspruchs 1 gelöst. Zweckmäßige Weiterbildungen und vorteilhafte Ausführungsformen der Erfindung sind Gegenstand der Unteransprüche.

Bei der erfindungsgemäßen Schwalbenschwanzverbindung sind an den Seitenflächen der Nut und an den Außenflächen des Zapfens zueinander korrespondierende Stufen vorgesehen. Durch diese Stufen und die weitere Unterteilung der Seiten- und Außenflächen kann gewährleistet werden, dass die ineinandergreifenden Elemente auch im oberen Bereich der Nut aufliegen, selbst wenn der Schwalbenschwanz nicht sorgfältig gefertigt ist, ein Schwund am Zapfen auftritt oder auf den Zapfen eine hohe Belastung in Vertikal- bzw. Schubrichtung wirkt. Durch die Stufen mit den zusätzlichen Abstützflächen können die von dem Bauteil mit dem Zapfen auf das Bauteil mit der Nut übertragenen Schubkräfte gleichmäßiger verteilt und insbesondere auch im oberen Bereich der Schwalbenschwanzverbindung übertragen werden. Die Belastung des Zapfens auf die Nut konzentriert sich nicht auf den unteren Bereich der Nut, sondern wird auch auf die ohnehin stabileren oberen Bereiche der Nut verteilt. Dadurch kann die Gefahr von Ausbrüchen der Nut im Bereich des Nutgrunds verringert und eine besonders stabile Schwalbenschwanzverbindung erreicht werden.

Zweckmäßigerweise sind an den beiden Außenflächen des Zapfens und den beiden Seitenflächen der Nut mehrere Stufen vorgesehen. Es kann an jeder Außenfläche des Zapfens und entsprechend an jeder Seitenfläche der Nut aber auch nur eine Stufe vorhanden sein.

In einer weiteren zweckmäßigen Ausführung der Erfindung sind die seitlichen Außenflächen des Zapfens am ersten Bauteil nach innen geneigt, so dass sich der Zapfen im Querschnitt von einer äußeren Stirnfläche zu einer inneren Stirnfläche hin trapezförmig verjüngt. Entsprechend sind auch die inneren Seitenflächen der Nut gegenüber einer stirnseitigen Außenfläche des zweiten Bauteils nach innen geneigt, so dass sich die Nut im Querschnitt von einer stirnseitigen Außenfläche des Bauteils zu einer Innenfläche trapezförmig erweitert. Durch eine derartige Kontur können auch Zugkräfte mit hoher Stabilität übertragen werden.

Auch der untere Nutgrund der Nut und das untere Ende des Zapfens können einander entsprechend geneigt sein.

Die Seitenflächen der Nut und auch die Außenflächen des Zapfens verlaufen in Einschubrichtung des Zapfens zweckmäßigerweise keilförmig aufeinander zu. Der Zapfen und die Nut können aber auch einen gleichbleibenden Querschnitt zwischen den Stufen aufweisen.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Schwalbenschwanzverbindung in einer Seitenansicht;
- **Figur 2**: die Schwalbenschwanzverbindung von Figur 1 in einer Vorderansicht;
- **Figur 3**: eine Schnittansicht entlang der Linie A-A von Figur 1;
- **Figur 4**: die Schwalbenschwanzverbindung von Figur 1 in einer Perspektive;
- **Figur 5**: eine Detailansicht einer Nut der Schwalbenschwanzverbindung von Figur 1 in einer Vorderansicht;
- **Figur 6**: eine Schnittansicht entlang der Linie A-A von Figur 5;
- **Figur 7**: die Nut von Figur 5 in einer Draufsicht;
- **Figur 8**: die Nut von Figur 5 in einer Perspektive;
- **Figur 9**: eine Detailansicht eines Zapfens der Schwalbenschwanzverbindung von Figur 1 in einer Vorderansicht;
- **Figur 10**: den Zapfen von Figur 9 in einer Seitenansicht;
- **Figur 11**: den Zapfen von Figur 9 in einer Draufsicht und
- **Figur 12**: den Zapfen von Figur 9 in einer Perspektive.

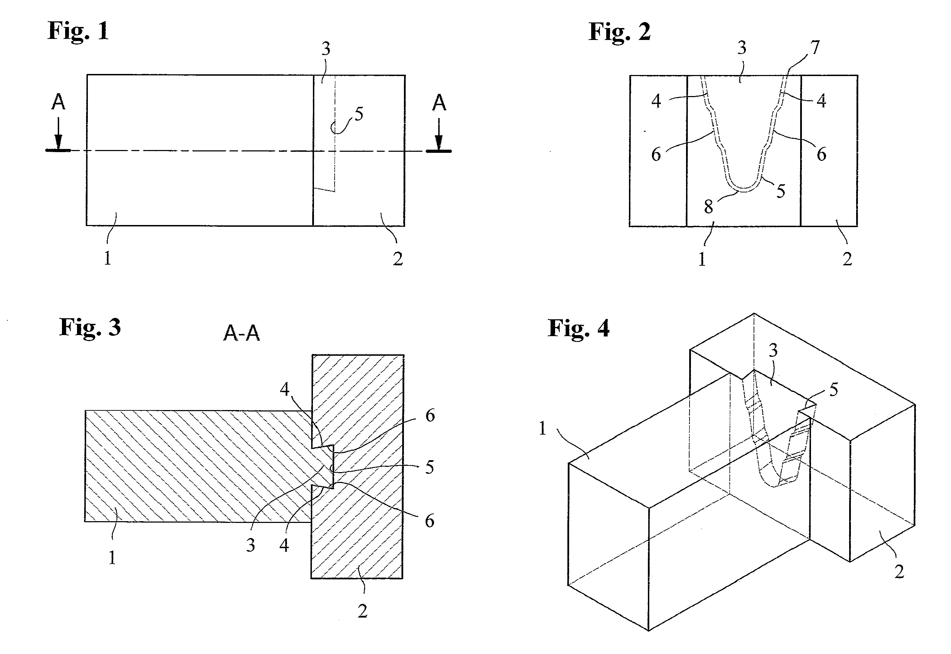

In den Figuren 1 bis 4 ist eine Schwalbenschwanzverbindung zur Verbindung zweier hier balkenförmiger Bauteile 1 und 2 aus Holz in verschiedenen Ansichten gezeigt. Die Schwalbenschwanzverbindung besteht aus einem am ersten Bauteil 1 vorgesehenen Zapfen 3 mit in Einschubrichtung keilförmig aufeinander zulaufenden seitlichen Außenflächen 4 und einer am zweiten Bauteil 2 vorgesehenen Nut 5, die zu den Außenflächen 4 des Zapfens 3 korrespondierende innere Seitenflächen 6 enthält.

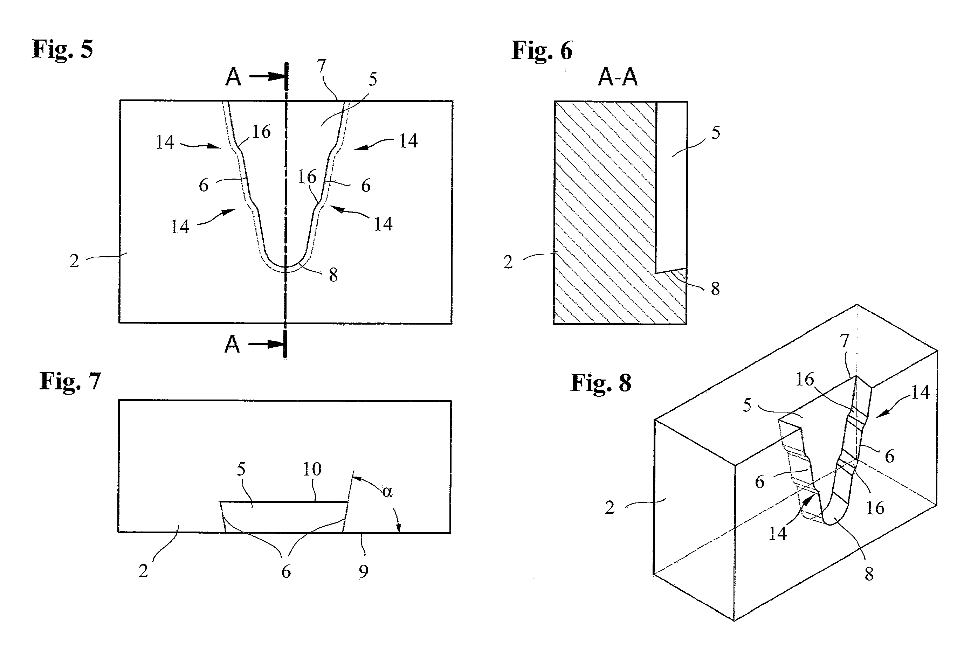

Wie aus Figur 2 und besonders aus den Figuren 5 und 8 hervorgeht, verlaufen die Seitenflächen 6 der Nut 5 ebenfalls keilförmig zwischen einer verbreiterten oberen Öffnung 7 und einem abgerundeten unteren Nutgrund 8 aufeinander zu, so dass sich die Nut 5 von ihrer oberen Öffnung 7 bis zum unteren Nutgrund 8 keilförmig verjüngt.

Aus Figur 7 ist ersichtlich, dass die inneren Seitenflächen 6 der Nut 5 gegenüber einer stirnseitigen Außenfläche 9 des zweiten Bauteils 2 um einen Winkel α von vorzugsweise 80° nach innen derart geneigt sind, dass sich die Nut 5 im Querschnitt von der Außenfläche 9 des Bauteils 2 zu einer Innenfläche 10 hin trapezförmig erweitert. Die Nut 5 weist somit im Querschnitt eine Schwalbenschwanzkontur auf. Auch der untere Nutgrund 8 der Nut 5 ist um den Winkel α nach innen geneigt, wie aus Figur 6 hervorgeht.

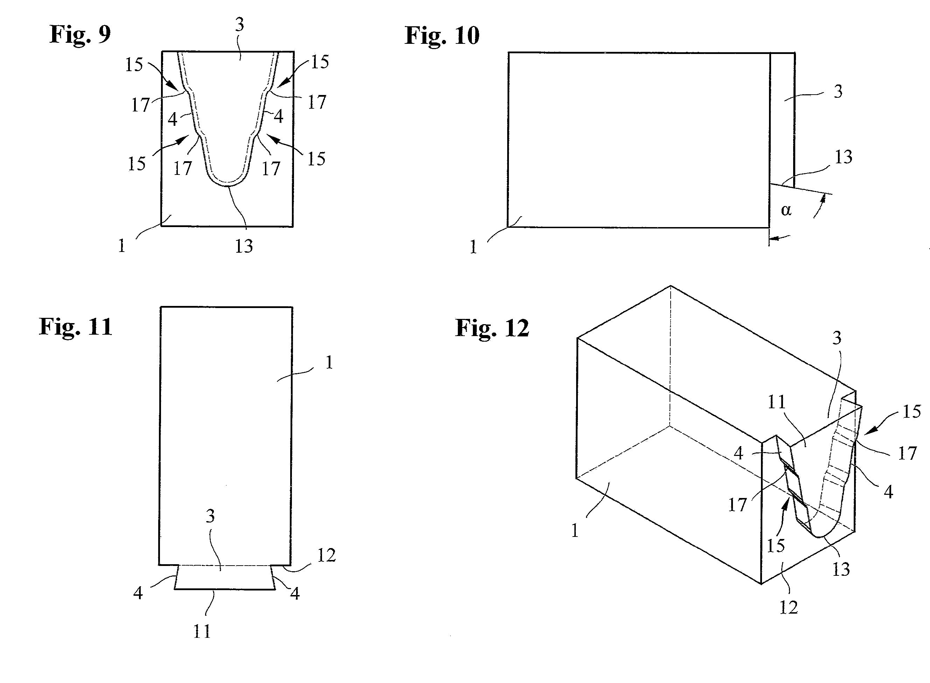

Zum Eingriff in die Nut 5 sind auch die seitlichen Außenflächen 4 des in den Figuren 9 bis 12 gezeigten Zapfens 3 am Bauteil 1 gemäß Figur 11 mit einem dem Winkel α entsprechenden Winkel nach innen geneigt, so dass sich der Zapfen 3 im Querschnitt von einer äußeren Stirnfläche 11 zu einer inneren Stirnfläche 12 hin nach innen verjüngt. Der Zapfen 3 weist eine der Kontur der Nut 5 entsprechende Schwalbenschwanzform auf. Das untere abgerundete Ende 13 des Zapfens 3 ist mit einem Winkel α von vorzugsweise 80° gegenüber der inneren Stirnfläche 12 nach innen geneigt, wie aus Figur 10 hervorgeht.

In den Figuren 8 und 12 ist besonders gut erkennbar, dass an den Seitenflächen 6 der Nut 5 und an den Außenflächen 4 des Zapfens 3 zueinander korrespondierende Stufen 14 und 15 vorgesehen sind. Die Stufen 14 und 15 weisen schräg oder rechtwinklig zur Einschubrichtung des Zapfens 3 abgewinkelte zusätzliche Abstützflächen 16 bzw. 17 auf, durch die eine zusätzliche Auflage zwischen Zapfen 3 und Nut 5 zur besseren Übertragung der in Einschubrichtung des Zapfens 3 wirkenden Schubkräfte selbst bei einem z.B. durch Fertigungsungenauigkeiten bedingten seitlichen Spiel zwischen Zapfen 3 und Nut 5 erreicht werden kann. Die Übergänge zwischen den Seitenflächen 6 und den Abstützflächen 16 der Nut 5 und die Übergänge zwischen den Außenflächen 4 und den Abstützflächen 17 des Zapfens 3 sind abgerundet.

Der Zapfen 3 enthält an den Stufen 15 in den Figuren 9 und 12 erkennbare untere Anstützflächen 17, die bei der gezeigten Ausführung unter einem Winkel im Bereich von 30 bis 60° zur Einschubrichtung des Zapfens 5 verlaufen und zur Anlage an den entsprechend geneigten, in Figur 5 und 8 gezeigten oberen Abstützflächen 16 der Nut 5 bestimmt sind. Durch die Stufen 14 und 15 mit den zusätzlichen Abstützflächen 16 und 17 können die auf das Bauteil 1 in Einschubrichtung des Zapfens 3 wirkenden Schubkräfte über den Zapfen 3 auch im oberen Bereich der Nut 5 auf das zweite Bauteil 2 übertragen werden. Selbst bei ungenauerer Fertigung von Zapfen 3 und Nut 5 konzentriert sich die Belastung nicht auf den unteren Bereich der Nut 5, sondern wird auf die ohnehin stabileren oberen Bereiche der Nut 5 verteilt, wodurch die Gefahr von Ausbrüchen der Nut 5 in Bereich des Nutgrunds 8 verringert wird.

## Patentansprüche

1. Schwalbenschwanzverbindung zur Verbindung zweier Bauteile (1, 2), insbesondere aus Holz, mit einem am ersten Bauteil (1) vorgesehenen Zapfen (3) mit seitlichen Außenflächen (4) und einer am zweiten Bauteil (2) vorgesehenen Nut (5), die zu den Außenflächen (4) des Zapfens (3) korrespondierende innere Seitenflächen (6) enthält, **dadurch gekennzeichnet, dass** an den Seitenflächen (6) der Nut (5) und an den Außenflächen (4) des Zapfens (3) zueinander korrespondierende Stufen (14, 15) vorgesehen sind.

2. Schwalbenschwanzverbindung nach Anspruch 1, **dadurch gekennzeichnet, dass** an den beiden Außenflächen (4) des Zapfens (3) und an den beiden Seitenflächen (6) der Nut (5) jeweils eine oder mehrere Stufen (14, 15) vorgesehen sind.

3. Schwalbenschwanzverbindung nach Anspruch 1 oder 2, **dadurch gekennzeichnet, dass** die Nut (5) an den Stufen (14) obere Abstützflächen (16) zum Eingriff mit unteren Abstützflächen (17) an den Stufen (15) des Zapfens (3) enthält.

4. Schwalbenschwanzverbindung nach Anspruch 3, **dadurch gekennzeichnet, dass** die oberen und unteren Abstützflächen (16, 17) rechtwinklig oder schräg zur Einschubrichtung des Zapfens (3) ausgerichtet sind.

5. Schwalbenschwanzverbindung nach Anspruch 3 oder 4, **dadurch gekennzeichnet, dass** die Übergänge zwischen den Seitenflächen (6) und den Abstützflächen (16) der Nut (5) und die Übergänge zwischen den Außenflächen (4) und den Abstützflächen (17) des Zapfens (3) abgerundet sind.

6. Schwalbenschwanzverbindung nach einem der Ansprüche 3 bis 5, **dadurch gekennzeichnet, dass** die oberen und unteren Abstützflächen (16, 17) unter einem Winkel von 30 bis 60° zur Einschubrichtung des Zapfens (3) ausgerichtet sind.

7. Schwalbenschwanzverbindung nach einem der Ansprüche 1 bis 6, **dadurch gekennzeichnet, dass** die Seitenflächen (6) der Nut (5) keilförmig zwischen einer verbreiterten oberen Öffnung (7) und einem unteren Nutgrund (8) verlaufen.

8. Schwalbenschwanzverbindung nach einem der Ansprüche 1 bis 7, **dadurch gekennzeichnet, dass** die inneren Seitenflächen (6) der Nut (5) gegenüber einer stirnseitigen Außenfläche (9) des zweiten Bauteils (2) nach innen geneigt sind, so dass sich die Nut (5) im Querschnitt von einer stirnseitigen Außenfläche (9) des Bauteils (2) zu einer Innenfläche (10) trapezförmig erweitert.

9. Schwalbenschwanzverbindung nach Anspruch 8, **dadurch gekennzeichnet, dass** der untere Nutgrund (8) der Nut (8) nach innen geneigt ist.

10. Schwalbenschwanzverbindung nach einem der Ansprüche 1 bis 9, **dadurch gekennzeichnet, dass** die seitlichen Außenflächen (4) des Zapfens (3) nach innen geneigt sind, so dass sich der Zapfen (3) im Querschnitt von einer äußeren Stirnfläche (11) zu einer inneren Stirnfläche (12) hin trapezförmig verjüngt.

11. Schwalbenschwanzverbindung nach einem der Ansprüche 1 bis 10, **dadurch gekennzeichnet, dass** ein unteres Ende (13) des Zapfens (3) nach innen geneigt ist.
